Europäisches Patentamt

European Patent Office

Office européen des brevets

(11) Publication number: **0 413 602 A2**

# EUROPEAN PATENT APPLICATION

(21) Application number: 90309059.5

(22) Date of filing: 17.08.90

(51) Int. Cl.5: **H01B 13/26, B23K 9/10**

(30) Priority: 18.08.89 GB 8918914
13.11.89 GB 8925639

(43) Date of publication of application:
**20.02.91 Bulletin 91/08**

(84) Designated Contracting States:
**FR IT**

(71) Applicant: **ASSOCIATED ELECTRICAL
INDUSTRIES LIMITED
1 Stanhope Gate
London W1A 1EH(GB)**

(72) Inventor: **Filler, Edward Albert
56 Paradise Lane Freshfield
Formby Merseyside L37 7DX(GB)**

(74) Representative: **Kirby, Harold Victor Albert
The General Electric Company, p.l.c. GEC
Patent Department Wembley Office Hirst
Research Centre East Lane
Wembley Middlesex HA9 7PP(GB)**

(54) **Manufacture of mineral insulated cables.**

(57) Apparatus and a process for manufacturing mineral-insulated cable (10) has seam-welding heads for welding a travelling strip simultaneously at two or more spaced points (F1, F2, F3) to form a tubular sheath for the cable.

In another aspect of the invention, in start-up or shut-down of a process for manufacturing mineral-insulated cable wherein a strip is seam-welded to form a tubular sheath for the cable (10), the same quality of seam-weld (100) is ensured as for the steady state condition by controlling the arc current and voltage as a function of the speed of conveyance of the strip.

Fig. 1.

## MANUFACTURE OF MINERAL INSULATED CABLES

This invention relates to the manufacture of mineral insulated cables, i.e. cables which consist of one or more electrical conductor wires enclosed within a tubular metal sheath and insulated from the sheath by compacted powdered insulating material, in which the wires are embedded. Such mineral insulated cables are used in wiring, but also for other purposes in the form of heating cables, thermocouple cables and heating elements for electric cookers. Apparatus and processes for the continuous manufacture of mineral insulated cable are described, for example, in British Patents 1592593, 2041260 and 2106808.

British Patent 2106808 discloses the use of an argon arc-welding head for seam welding the metal sheath which is inclined at an obtuse angle to the approaching abutting edges of the sheath, in order to preheat the edges. This tends to spread out the arc and improves the quality of the weld. The purpose of the present invention is to allow a substantial increase in the speed of production of the cable, while maintaining the same quality of seam weld. It has been discovered that this is not possible simply by increasing the power supplied to the arc-welding head.

Accordingly, according to a first aspect, the invention provides a process for the manufacture of mineral insulated cable in which a sheath is continuously formed from a strip of ductile metal travelling generally in the direction of its length by bending the strip into tubular form and arc-welding the abutting edges of the strip together at a welding region to form a seam-weld, powdered insulating material and one or more conducting wires are simultaneously introduced into the sheath so formed, and the resulting assembly is subsequently passed through reduction means, chsrcterised in that the strip is seam-welded simultaneously at two or more spaced points.

Apparatus according to this first aspect of the invention for manufacturing mineral insulated cable includes means for conveying a strip of ductile metal generally in the direction of its length, and for bending the strip into tubular form to form a sheath, means for introducing powdered insulating material and one or more conductors into the sheath, and means for reducing the sheath, and arc-welding means for seam-welding the abutting edges of the strip together, characterised in that said arc-welding means comprises two or more adjacent arc-welding heads whose target points are positioned in series along the path of the sheath.

It has been discovered that the use of two or more arc-welding heads in this manner allows the process speed to be increased by as much as two or three times, without reducing the quality of the seam-weld. Preferably the bending of the strip into tubular form, and the welding of the strip are arranged to take place as the strip is conveyed in a generally vertically downwards direction, although the process can be applied to strip moving in directions other than vertical, in some cases horizontally.

During the production of mineral insulated cable, it is necessary periodically to start-up and to shut-down the otherwise steady process, so that the process speed accelerates from rest to a steady speed and then decelerates from the steady speed to rest. This involves considerable wastage of cable, because it is usually necessary to dispose of the lengths of cable produced during start-up and shut-down periods. A further purpose of the present invention is to avoid this wastage by ensuring that the quality of the seam-weld is as good during start-up and shut-down as it is during the steady state condition.

According to a second aspect, therefore, the invention provides a process for the manufacture of mineral insulated cable in which a sheath is continuously formed from a strip of ductile metal travelling generally in the direction of its length by bending the strip into tubular form and arc-welding the abutting edges of the strip together at a welding region to form a seam-weld, powdered insulating material and one or more conducting wires are simultaneously introduced into the sheath so formed, and the resulting assembly is subsequently passed through reduction means, characterised in that, during acceleration or deceleration of the motion of the strip at start-up or shutdown, the current and voltage of the arc-weld is controlled as a predetermined function of the monitored speed of the strip to ensure the same quality of seam-weld as for the steady state condition.

Apparatus according to the second aspect of the invention for manufacturing mineral insulated cable includes means for conveying a strip of ductile metal in the direction of its length, and for bending the strip into tubular form to form a sheath, means for introducing powdered insulating material and one or more conductors into the sheath, means for reducing the sheath, and an arc-welding head for seam-welding the abutting edges of the strip together, characterised in that said apparatus includes control means responsive to the speed at which the strip is conveyed, during start-up or shut-down acceleration or deceleration, to control the current and voltage of the arc-weld as a predetermined function of the speed to ensure the same quality of seam-weld as for the steady state condition.

One way in which the invention is used will now be described, by way of example only, with reference to the accompanying drawings in which:-

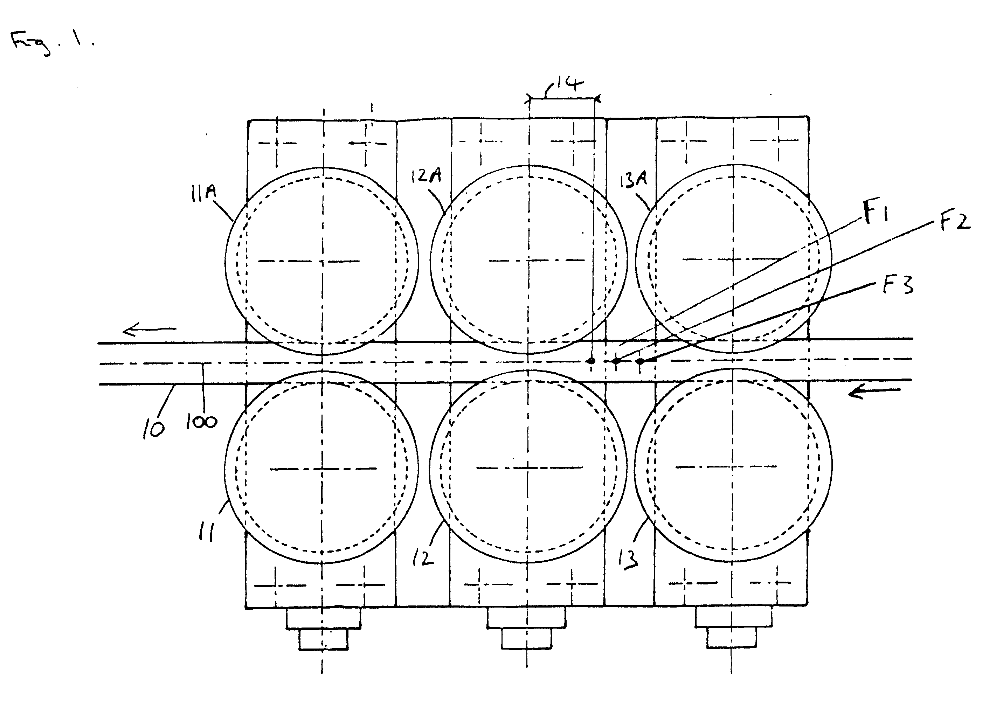

Figure 1 is a diagrammatic axial section, drawn to half scale, of part of the apparatus;

Figure 2 is a graph illustrating an aspect of the operation of the apparatus; and

Figure 3 is a block schematic diagram of a control part of the apparatus.

The apparatus for producing mineral insulated cable is described in detail in British Patent 2106808. In that apparatus, a single argon arc-welding head was provided, but in the embodiment of the present invention shown in the drawing there are three such welding heads, directed at spot targets F1, F2 and F3 equally-spaced along the line 100 of the seam-weld on the vertically-travelling assembly 10. Pressure-controlled pairs of rollers 11, 11A; 12, 12A; 13, 13A guide the sheath 10 past the welding-heads. The pairs of rollers 12, 12A and 13, 13A at opposite ends of the welding-heads ensure that the abutting edges of the tape are pushed together at a predetermined pressure. Further downstream, rollers 11, 11A, are seam-nipping rollers which grip the welded seam 100 and ensure accurate alignment of the abutting edges with the line through the target spots F1 to F3.

The three welding torches (not shown) are of the tungsten-inert gas (T.I.G.) type, and in this example the electrodes are 2% thoriated and the inert gas is argon. The welding torches are directed perpendicularly to the vertical path of the cable 10, in contrast to the angle of inclination of the welding-head of British Patent 2106808. The three welding torches are mounted on a common support bracket which is fully adjustable in three dimensions. In particular, the axial position of the welding torches is adjustable to enable a new weld to overlap an old weld when the prgcess is restarted after a stoppage, so that a continuous length of cable may be produced even if the process is run intermittently. Accordingly, the axial distance 14 between the centres of the middle pair of rollers 12, 12A and the target point F1 furthest downstream, is variable, and in this example is adjustable between 5 and 20 mm.

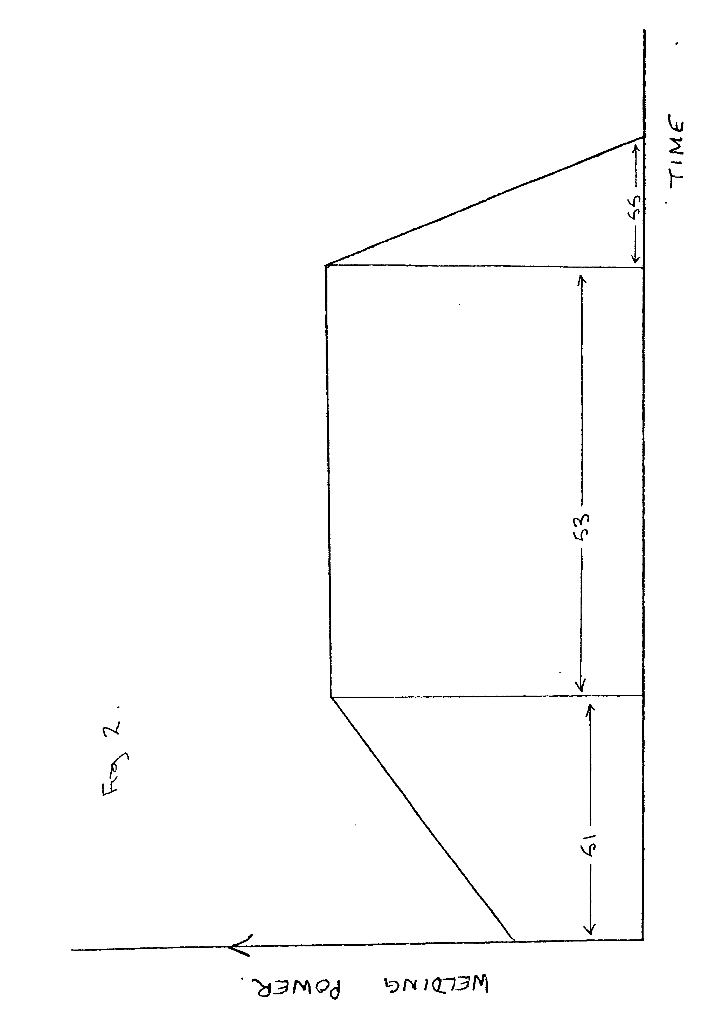

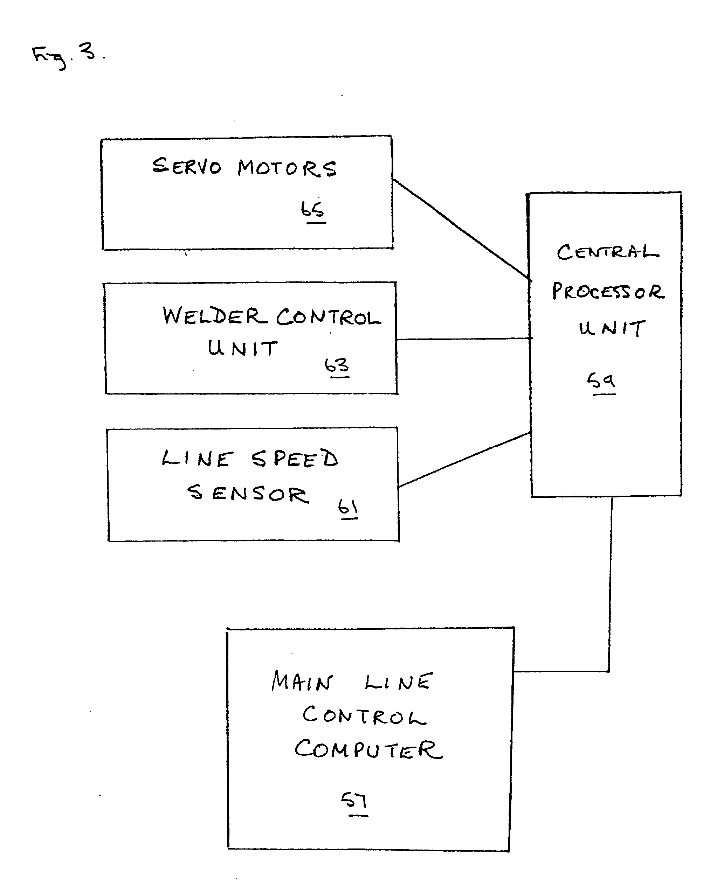

The welding torches operate simultaneously, and their electrodes are supplied from a remote power supply (not shown) controlled by electrical signals of relatively low voltage (up to 10 volts) from a control unit (63 in Figure 3, see below). The optimum arc current and arc voltage for the best quality seam-weld is an empirically-derived function of the process speed, i.e. the speed at which the cable is produced. The control unit has circuitry which responds to a signal indicative of the process speed to generate control signals for transmission to the power supply unit to set the correct instantaneous current and voltage. Accordingly, as the process accelerates from rest to its steady state speed during start-up, the arc current and voltage increases in a predetermined manner to its steady state values, and the reverse occurs during shut-down. Figure 2 is a graph of a typical variation of welding power with time over the start-up 51, steady state 53 and shut-down periods of operation.

By closely controlling the arc current and voltage in this manner during start-up and shut-down, the seam-weld quality is as good as during the steady state condition, and this avoids wastage of cable.

Referring to Figure 3, the apparatus includes a main line control computer 57 which controls the manufacturing process, in particular the computer 57 enables the setting of the parameters of operation of the process, for example the starting and stopping times and the steady state speed of the process. The apparatus further includes a central processing unit 59, a line speed sensor 61, a welder control unit 63 and servo motors 65. The servo motors 65 adjust the position of the welding torches in the aforementioned three dimensions. The sensor 61 provides the aforementioned signal indicative of the process speed, and in response to the receipt of such signal the central processing unit 59 instructs the welder control unit 63 to cause the remote power supply (not shown) to supply an appropriate welding arc current and voltage as aforementioned. The central processing unit 59 also, acting in response to signals received from the computer 57 defining the starting and stopping times of the process, causes the servo motors to adjust the position of the welding torches such that the aforementioned new overlap weld is produced on restarting the process after a stoppage.

In the example described, there are three torch welding heads, but it will be appreciated that production speed could still be improved with the use of only two welding heads; more than three welding heads could also be used, but it is anticipated that the benefits gained would not be proportionate to the cost.

Further, the control of arc current and voltage in the manner described would be applicable to apparatus which had only one arc-welding head.

In a modification of the apparatus described by way of example the spacing between target points F1 and F2 is increased to allow sufficient cooling of the seam-weld as it moves between points F1 and F2 to enable the welding head directed at target point F1 to be used to reduce any undesired thickening of the seam-weld that has occurred during the action of the welding heads directed at points F2 and F3.

**Claims**

1. A process for the manufacture of mineral insulated cable in which a sheath (10) is continuously formed from a strip of ductile metal travelling generally in the direction of its length by bending the strip into tubular form and arc welding the abutting edges of the strip together at a welding region to form a seam weld (100), powdered insulating material and one or more conducting wires are simultaneously introduced into the sheath (10) so formed, and the resulting assembly is subsequently passed through reduction means, characterised in that the strip is seam-welded simultaneously at two or more spaced points (F1, F2, F3).

2. Apparatus for manufacturing mineral insulated cable including means for conveying a strip of ductile metal generally in the direction of its length, and for bending the strip into tubular form to form a sheath (10), means for introducing powdered insulating material and one or more conductors into the sheath, means for reducing the sheath, and arc-welding means for seam-welding the abutting edges of the strip together, characterised in that said arc-welding means comprises two or more adjacent arc-welding heads whose target points (F1, F2, F3) are positioned in series along the path of the sheath (10).

3. A process or apparatus according to Claim 1 or Claim 2 wherein the bending of the strip and the welding of the strip take place as the strip is conveyed in a generally vertically downwards direction.

4. A process or apparatus according to Claim 1, 2 or 3 in which the arc-welding heads are tungsten-inert gas heads.

5. A process or apparatus according to Claim 1, 2, 3 or 4 in which the number of arc-welding heads is three.

6. A process or apparatus according to Claim 5, in which the target points (F1, F2, F3) of the welding heads on the seam (100) in use are equally spaced apart.

7. A process or apparatus according to Claim 5 wherein the spacing between the two welding head target points (F1, F2) that are most downstream in said direction is such as to allow sufficient cooling of the seam-weld (100) as it moves between the said two target points (F1, F2) to enable the welding head directed at the target point (F1) that is most downstream in said direction to be used to reduce any thickening of the seam-weld (100) that has occurred during the action of the welding heads directed at the two target points (F2, F3) that are most upstream in said direction.

8. A process for the manufacture of mineral insulated cable in which a sheath (10) is continuously formed from a strip of ductile metal travelling generally in the direction of its length by bending the strip into tubular form and arc welding the abutting edges of the strip together at a welding region to form a seam weld (100), powdered insulating material and one or more conducting wires are simultaneously introduced into the sheath (10) so formed, and the resulting assembly is subsequently passed through reduction means, characterised in that during acceleration or deceleration of the motion of the strip at start-up (51) or shut-down (55), the current and voltage of the arc-weld is controlled as a predetermined function of the monitored speed of the strip to ensure the same quality of seam-weld (100) as for the steady state (53) condition.

9. Apparatus for manufacturing mineral insulated cable including means for conveying a strip of ductile metal generally in the direction of its length, and for bending the strip into tubular form to form a sheath (10), means for introducing powdered insulating material and one or more conductors into the sheath (10), means for reducing the sheath (10), and an arc welding head for beam-welding the abutting edges of the strip together, characterised in that said apparatus includes control means (59, 63) responsive to the speed at which the strip is conveyed, during start-up (51) or shut-down (55) acceleration or deceleration, to control the current and voltage of the arc-weld as a predetermined function of the speed to ensure the same quality of seam-weld (100) as for the steady state (53) condition.

10. A process or apparatus according to Claim 8 or 9 wherein the bending of the strip and the welding of the strip take place as the strip is conveyed in a generally vertically downwards direction.

Fig. 1

Fig 2.

WELDING POWER.

51

53

55

TIME

EP 0 413 602 A2

Fig. 3.